# EUROPEAN PATENT APPLICATION

(11) **EP 4 491 911 A1**
(43) Date of publication of application: **15.01.2025**
(21) Application number: 23846507.4
(22) Date of filing: 25.07.2023
(51) Int. Cl.: F16H 57/04

(54) **VEHICULAR DRIVING DEVICE**

(30) Priority: 29.07.2022 JP 2022121986; 13.03.2023 JP 2023038625
(71) Applicant: AISIN CORPORATION, Kariya-shi, Aichi 448-8650 (JP)
(72) Inventor: MUKAIYAMA Koki, Kariya-shi, Aichi 448-8650 (JP); YAMADA Takafumi, Kariya-shi, Aichi 448-8650 (JP); SUZUKI Tomoyuki, Kariya-shi, Aichi 448-8650 (JP); TSUGE Motohiro, Kariya-shi, Aichi 448-8650 (JP)
(74) Representative: Kramer Barske Schmidtchen Patentanwälte PartG mbB
(86) International application number: PCT/JP2023/027167
(87) International publication number: WO 2024/024777

(57) **Abstract**

A transmission mechanism for transmitting driving force between a drive source for wheels and a pair of output members includes a differential input gear (41) disposed coaxially with the output members (on a shaft A2) and a target rotating body (6) that is disposed on a shaft (A1) different from those for the output members and rotates in a direction opposite to the differential input gear (41). A catch tank (7) provided radially outward (R2) with respect to a guide wall (9r) that surrounds the target rotating body (6) includes a first introduction path through which oil scattered from the differential input gear (41) is introduced when the wheel rotates in a first side, and a second introduction path (K2) through which oil scattered from the gathering section (60) of the target rotating body (6) is introduced when the wheel rotates in a side (C2) opposite to the first side.

## Description

### Technical Field

This disclosure generally relates to a vehicular driving device including a drive source, a pair of output members each being coupled to and driven by one of a pair of wheels, a transmission mechanism that transmits driving force between the drive source and the pair of output members, a case that accommodates the transmission mechanism and oil, and a catch tank that temporarily stores the oil in the case.

### Background Art

Some of such vehicular driving devices as described above include a lubricating structure that gathers oil accumulated in the case with a rotating body that is included in the transmission mechanism and rotates in conjunction with the wheel, temporarily stores the oil in the catch tank, and supplies oil, from the catch tank, for lubricating gears, bearings, and the like of the transmission mechanism. However, while some of such vehicular driving devices including the lubricating structure can introduce oil into the catch tank when a rotation direction of the wheel is in one side, the vehicular driving device cannot introduce or may have trouble in introducing the oil into the catch tank when the rotation direction of the wheel is in another side.

JP2007-224959A discloses a lubricating device (20) that can guide oil gathered by a rotating body of a transmission mechanism to a catch tank (22) irrespective of a direction in which a wheel rotates (note that reference signs in parentheses described in Background Art derive from those used in a literature being referred to by this description). According to this literature, in a first path in which the oil gathered by a first rotating body (50) flows toward the catch tank (22) when the wheel rotates in a first side, a swingable first door member (202b) that allows the oil to flow through and prevents the oil from flowing backward is provided. In addition, in a second path in which the oil gathered by a second rotating body (61) that rotates in a direction opposite to the first rotating body (50) flows toward the catch tank (22) when the wheel rotates in a second side being opposite to the first side, a swingable second door member (202a) that allows the oil to flow through and prevents the oil from flowing backward is provided. In this manner, the lubricating device (20) is configured in such a way that oil can be introduced into the catch tank (22) irrespective of whether the wheel rotates in the first side or the second side. The first rotating body (50) is a differential input gear (50) in a differential gear device. The second rotating body (61) is a counter driven gear (61) being one of gears constituting a counter gear mechanism (CG) that transmits power between a drive gear (32) coupled to a rotation shaft (40) of a motor (M) serving as a drive source for the wheel and the differential input gear (50) and also serves as a reducer (transmission). Both the first rotating body (50) and the second rotating body (61) are external gears.

### Citation List

### Patent Literature

Patent Literature 1: JP2007-224959A

### Summary of Invention

### Technical Problem

The lubricating structure disclosed in the aforementioned literature can introduce oil into the catch tank with the rotating body of the transmission mechanism gathering the oil irrespective of a direction in which the wheel rotates. As described above, the transmission mechanism includes the counter gear mechanism including an external gear, and by using one of gears constituting the counter gear mechanism as the second rotating body, oil can be gathered even when the wheel rotates in the second side. However, in some embodiments, the transmission mechanism may include, for example, a planetary gear mechanism as a reducer (transmission) instead of the counter gear mechanism. In the planetary gear mechanism, a gear having the largest diameter is a ring gear, which is an internal gear, and it is substantially impossible to gather oil with teeth of the ring gear. In other words, in a vehicular driving device that includes a planetary gear mechanism in a transmission mechanism, it is difficult to employ a configuration in which the second rotating body different from the first rotating body gathers oil when the wheel rotates in the second side as described in the aforementioned document.

Therefore, it is desired to achieve a lubricating structure having a simple structure in a vehicular driving device including a planetary gear mechanism in a transmission mechanism, the lubricating structure enabling oil to be introduced into a catch tank with a rotating body of the transmission mechanism gathering the oil irrespective of a direction in which the wheel rotates.

### Solution to Problem

In view of the problem described above, a vehicular driving device includes: a drive source; a pair of output members, each being coupled to and driven by one of a pair of wheels; a transmission mechanism that transmits driving force between the drive source and a pair of the output members; a case that accommodates the transmission mechanism and oil; and a catch tank that temporarily stores the oil in the case, wherein the transmission mechanism includes: a differential input gear that is disposed coaxially with a pair of the output members and to which the driving force from the drive source is transmitted; a differential gear mechanism that distributes the driving force transmitted to the differential input gear into a pair of the output members; and a target rotating body that is disposed on a shaft different from those for a pair of the output members and rotates in a direction opposite to the differential input gear, the transmission mechanism includes a planetary gear mechanism, the target rotating body is a rotating body constituting the planetary gear mechanism, the target rotating body includes a gathering section being formed along a circumference of the target rotating body, the case includes a guide wall that surrounds the target rotating body, assuming a shaft in which a rotation axis of the target rotating body is placed as a target shaft, a direction orthogonal to the target shaft as a radial direction, a rotational state of the transmission mechanism when the wheel rotates in a first side as a first rotational state, and a rotational state of the transmission mechanism when the wheel rotates in a second side opposite to the first side as a second rotational state, and the catch tank is provided on an outer side in the radial direction with respect to the guide wall and includes a first introduction path into which oil scattered from the differential input gear is introduced in the first rotational state and a second introduction path into which oil scattered from the gathering section of the target rotating body is introduced in the second rotational state.

With this configuration, when the wheel rotates in the first side, oil gathered by the differential input gear is introduced through the first introduction path into the catch tank, and when the wheel rotates in the second side, oil gathered by the gathering section of the target rotating body is introduced through the second introduction path into the catch tank. Therefore, irrespective of a rotation direction of the wheel, oil in the case can be appropriately gathered by the rotating body of the transmission mechanism and introduced into the catch tank. In addition, with this configuration, since the case includes the guide wall that surrounds the target rotating body, flow of oil can be guided in such a way that the oil gathered by the gathering section of the target rotating body circulates around the target rotating body. Thus, even when the wheel rotates in the second side, oil that flows along the guide wall can be guided to the second introduction path and a sufficient amount of oil can be introduced into the catch tank. Thus, with this configuration, a lubricating structure having a simple structure can be achieved in a vehicular driving device including a planetary gear mechanism in a transmission mechanism, the lubricating structure enabling oil to be introduced into a catch tank with a rotating body of the transmission mechanism gathering the oil irrespective of a direction in which a wheel rotates.

Additional features and advantages of the vehicular driving device will be apparent from descriptions of embodiments to be described below with reference to the drawings.

### Brief Description of Drawings

FIG. 1 is a skeleton diagram illustrating an example of a vehicular driving device.
FIG. 2 is an explanatory diagram illustrating an example in which oil is introduced into a catch tank in a first rotational state in a plan view viewed from an axial direction.
FIG. 3 is an explanatory diagram illustrating an example in which oil is introduced into the catch tank in a second rotational state in a plan view viewed from the axial direction.
FIG. 4 is an explanatory diagram illustrating arrangement of a differential input gear, a target rotating body, and a second feeding port in an axial direction.
FIG. 5 is a cross-sectional view illustrating an alternative example of the vehicular driving device.
FIG. 6 is a skeleton diagram illustrating the alternative example of the vehicular driving device.
FIG. 7 is an explanatory diagram illustrating a second example in which oil is introduced into the catch tank in the second rotational state in a plan view viewed from the axial direction.
FIG. 8 is an enlarged partial cross-sectional view illustrating an example of a lubricating oil passage.
FIG. 9 is an enlarged partial cross-sectional view illustrating an alternative example of the lubricating oil passage.
FIG. 10 is a plan view viewed from the axial direction illustrating an example of an alternative configuration of the catch tank.
FIG. 11 is a perspective view illustrating an example of a carrier integrated with a gathering section as a sintered body.
FIG. 12 is a diagram schematically illustrating an example of how a first member and a second member are joined together.
FIG. 13 is a diagram schematically illustrating an example of how the first member and the second member are joined together.
FIG. 14 is a perspective view illustrating an example of a carrier constructed by attaching a third member having a gathering section to an individual carrier.

### Description of Embodiments

Embodiments of a vehicular driving device are described below on the basis of the drawings. In this application, "coupled to and driven by" means a state in which two rotatable elements are coupled in such a way that these two rotatable elements can transmit driving force therebetween, and this includes a state in which the two rotatable elements are coupled in such a way as to rotate in an integrated manner and a state in which the two rotatable elements are coupled in such a way that these rotatable elements can transmit the driving force through one or more transmission members. Such transmission members include various types of members that transmit the driving force at the same rotational speed or by changing the rotational speed, such as a shaft, a gear mechanism, a belt, and a chain. An engaging device that selectively transmits the rotation and the driving force, such as a frictionally engaging device or a meshing engaging device may be included in the transmission member. It should be noted, however, that a state in which the rotatable elements in the planetary gear mechanism are coupled to and driven by each other means a state in which a plurality of rotatable elements in the planetary gear mechanism are coupled to each other without a rotatable element other than those included in the planetary gear mechanism.

Two elements being arranged in such a way as to "overlap when viewed from a specific direction" means that when an imaginary straight line that is in parallel with a viewing direction is shifted in directions orthogonal to the imaginary straight line, there is a region in which the shifted imaginary straight line at least partially intersect both of the two elements. In addition, "arrangement areas in a specific direction" for the two elements are "overlapping" means that the arrangement area for one of the two elements in a specific direction is at least partially contained in the arrangement area for the other of the two elements in the specific direction.

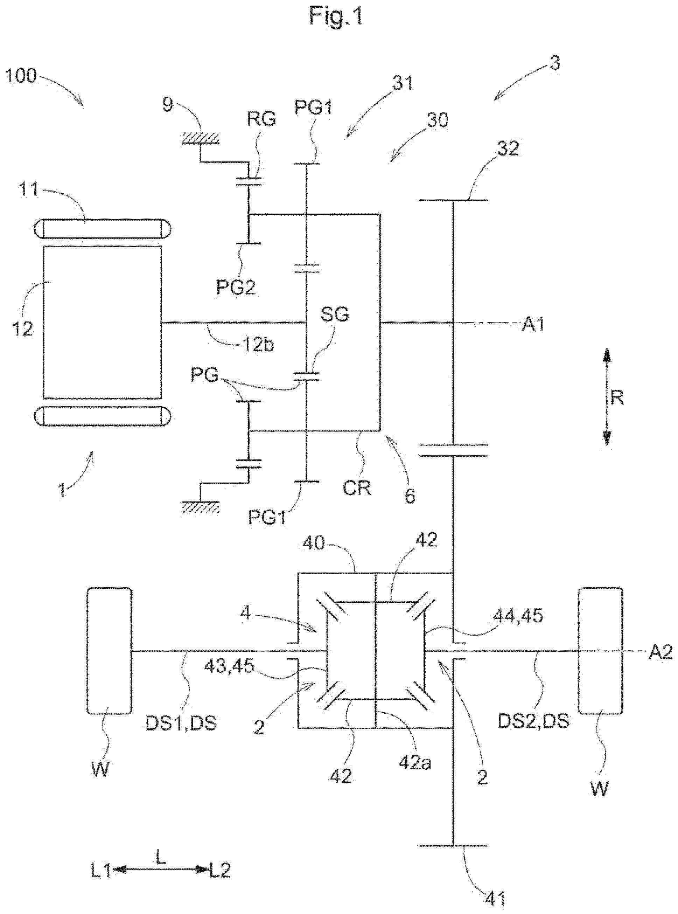

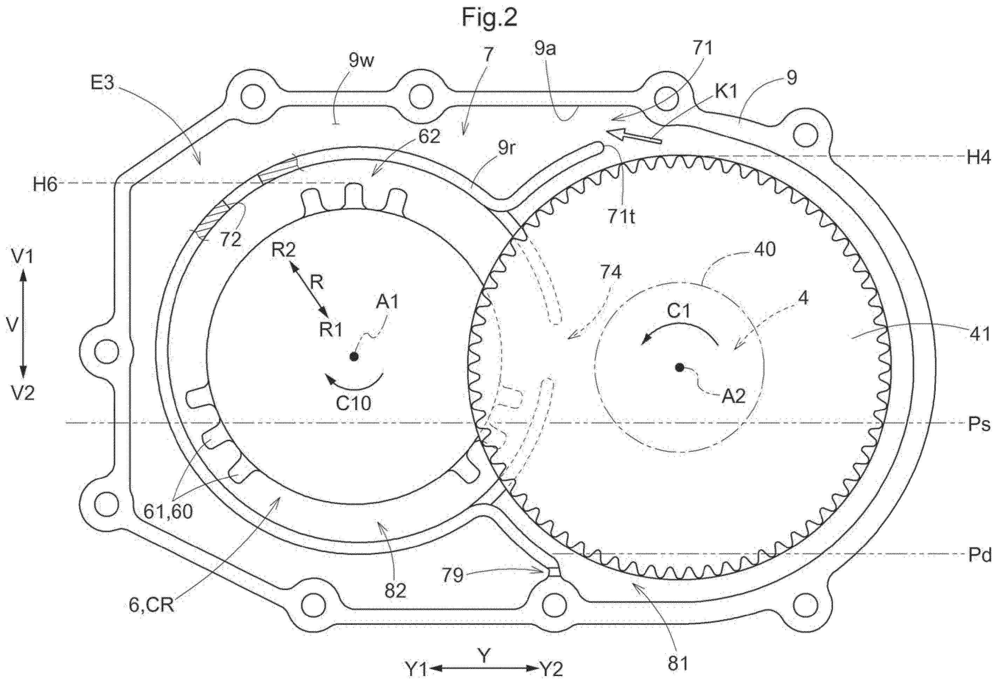

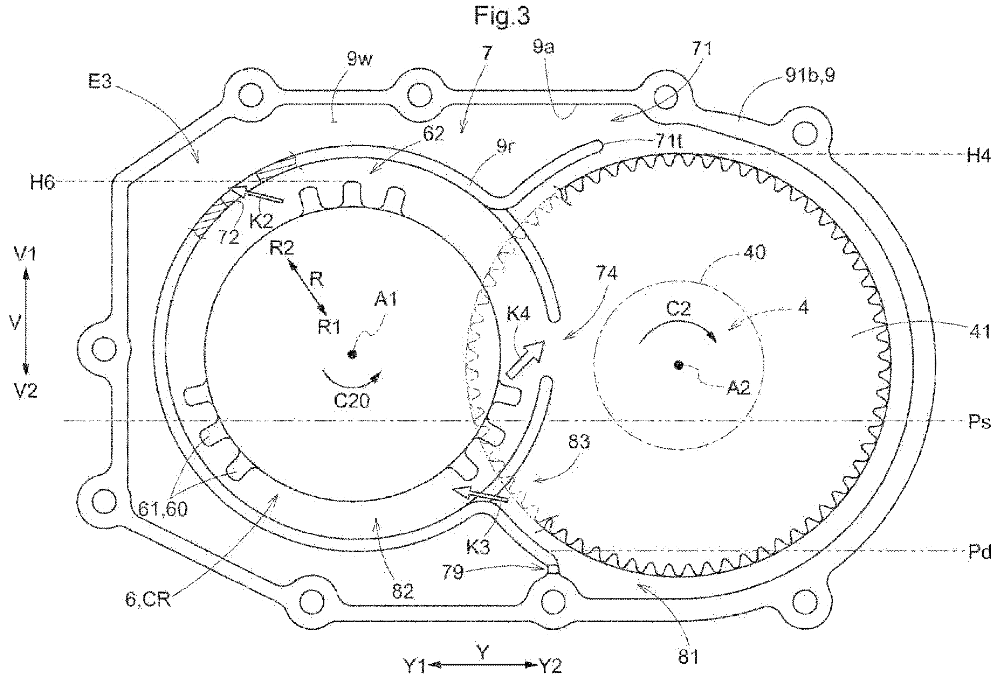

As illustrated in FIG. 1, a vehicular driving device 100 includes a rotating electric machine 1 as a drive source for wheels W, a pair of output members 2 each of which is coupled to and driven by one of the pair of wheels W, a transmission mechanism 3 that transmits driving force between the rotating electric machine 1 and the pair of output members 2, and a case 9 that accommodates the rotating electric machine 1 and the transmission mechanism 3. The rotating electric machine 1 and the pair of output members 2 are disposed on two separate shafts (a first shaft A1 and a second shaft A2, respectively) that are arranged in parallel with each other. The rotating electric machine 1 is disposed on the first shaft A1. The case 9 at least has a rotating electric machine accommodation chamber (not illustrated) that accommodates the rotating electric machine 1 and a transmission mechanism accommodation chamber E3 (see figures such as FIG. 2 and FIG. 3) that accommodates the transmission mechanism 3 formed inside. The rotating electric machine accommodation chamber and the transmission mechanism accommodation chamber E3 are separated by a partition wall 9w.

The case 9 also accommodates oil for lubricating (and also cooling) the rotating electric machine 1 and the transmission mechanism 3. Oil is stored in a so-called oil accumulation section 81 on a lower side V2 of the case 9 due to gravity. While details are to be described later, in FIG. 2 and FIG. 3, a reference sign "Ps" denotes a static oil level Ps, which is the highest oil level in the case 9. A reference sign "Pd" denotes a lowest dynamic oil level Pd, which is the lowest oil level in the case 9.

The transmission mechanism 3 at least includes: a differential input gear 41 that is disposed coaxially with the pair of output members 2 (on the second shaft A2) and to which the driving force from the rotating electric machine 1 is transmitted; and a differential gear mechanism 4 that distributes the driving force transmitted to the differential input gear 41 to the pair of output members 2. The differential gear mechanism 4 is housed in a differential case 40, and the differential input gear 41, the differential case 40, and the differential gear mechanism 4 constitute a differential gear device. As will be described later, in this embodiment, an embodiment is illustrated in which a pair of side gears 45 of the differential gear mechanism 4 correspond to the output members 2. It can be described that the differential gear mechanism 4 including the side gears 45 and the differential gear device are included in the transmission mechanism 3 and the side gears 45 correspond to the output members 2 and at the same time, the side gears 45 corresponds to the transmission mechanism 3.

As will be described later, in this embodiment, the transmission mechanism 3 also includes, in addition to the differential gear device (that is, the differential input gear 41, the differential case 40, and the differential gear mechanism 4), a gear mechanism 30 that is disposed coaxially with the rotating electric machine 1 (on the first shaft A1) and that transmits the driving force from the rotating electric machine 1 to the differential input gear 41. As will be described later, in this embodiment, the gear mechanism 30 includes a planetary gear mechanism 31 and a transmission gear 32.

The rotating electric machine 1 that serves as the drive source for the wheels W includes a stator 11 and a rotor 12. Rotation of the rotor 12 is transmitted through the transmission mechanism 3 to the output members 2. The rotating electric machine 1 functions as a motor that generates power from supplied electric power and also functions as a generator that generates electric power from supplied power. Specifically, the rotating electric machine 1 is electrically connected to an electric storage device that is not illustrated, such as a battery or a capacitor. The rotating electric machine 1 generates the driving force by receiving electric power stored in the electric storage device. The rotating electric machine 1 also charges the electric storage device using the driving force transmitted from the wheels W.

The rotor 12, the planetary gear mechanism 31, and the transmission gear 32 are disposed on the first shaft A1 that serves as an axis therefor. The output members 2, the differential input gear 41, and the differential gear mechanism 4 are disposed on the second shaft A2 that serves as an axis therefor.

In the following description, a direction in parallel with the first shaft A1 and the second shaft A2 is referred to as an "axial direction L" of the vehicular driving device 100. One side of the axial direction L is referred to as a "first side L1 of the axial direction" and the other side of the axial direction L is referred to as a "second side L2 of the axial direction". In this embodiment, in the axial direction L, a side on which the rotor 12 is disposed with respect to the planetary gear mechanism 31 is defined as the first side L1 of the axial direction and the other side is defined as the second side L2 of the axial direction.

A direction orthogonal to each of the first shaft A1 and the second shaft A2 is individually referred to as a "radial direction R" with respect to each shaft, and as illustrated in figures such as FIG. 2 and FIG. 3, a side closer to the shaft in the radial direction R is referred to as a "radially inner side R1" while a side farther from the shaft in the radial direction R is referred to as a "radially outer side R2". It may be simply referred to as the "radial direction R" when differentiating which shaft is a reference is not necessary or when it is obvious which shaft is a reference.

As illustrated in figures such as FIG. 2 to FIG. 4, in a condition in which the vehicular driving device 100 is installed on a vehicle, a direction along a vertical direction is referred to as an "upward or downward direction V" and an upper side of the upward or downward direction V is referred to as an "upper side V1" while a lower side of the upward or downward direction V is referred to as a "lower side V2". In this embodiment, in a condition in which the vehicular driving device 100 is installed on a vehicle, it is assumed that the axial direction L extends along a horizontal direction and that the axial direction L is orthogonal to the upward or downward direction V.

As illustrated in figures such as FIG. 2 and FIG. 3, a direction orthogonal to the axial direction L and the upward or downward direction V is referred to as an "arrangement direction Y" and a side on which the first shaft A1 is disposed with respect to the second shaft A2 is referred to as a "first side Y1 of the arrangement direction" and the other side is referred to as a "second side Y2 of the arrangement direction". When the vehicular driving device 100 is installed on a vehicle, the arrangement direction Y is a direction that extends along a longitudinal direction of the vehicle. Both the first side Y1 of the arrangement direction and the second side Y2 of the arrangement direction may be located on the front side of the vehicle (the front side when the vehicle moves forward).

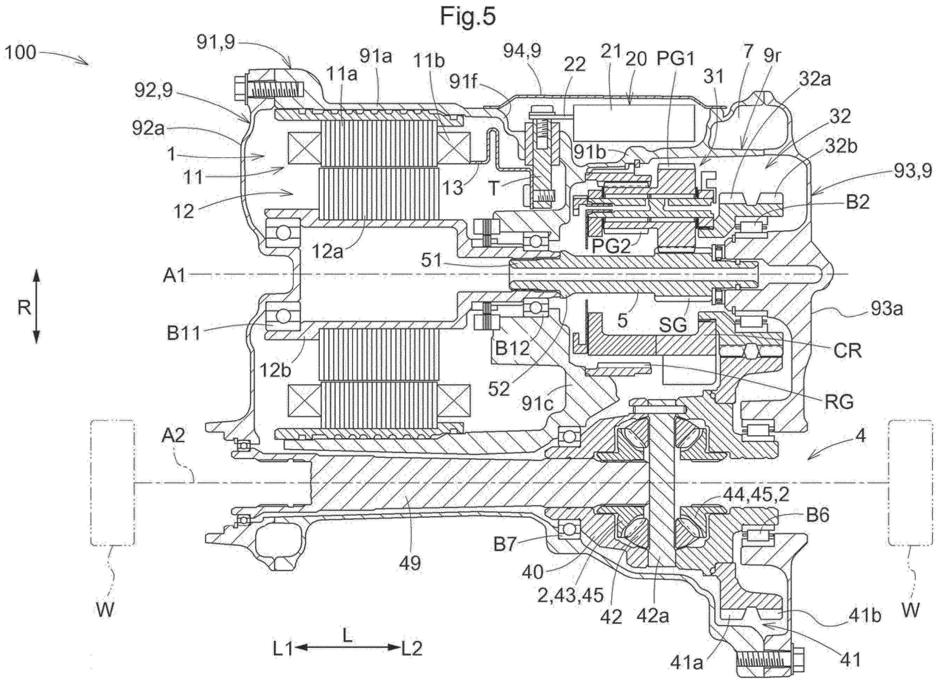

The rotor 12 of the rotating electric machine 1 is coupled to a rotor shaft 12b that is rotatably supported by a rotor bearing that is not illustrated in FIG. 1 (which corresponds to a first rotor bearing B11 and a second rotor bearing B12 in an embodiment illustrated in FIG. 5). As described above, the gear mechanism 30 includes the planetary gear mechanism 31 and the transmission gear 32. The planetary gear mechanism 31 reduces the rotation of the rotor 12 and transmits the rotation to the transmission gear 32. The transmission gear 32 transmits the rotation of the rotor 12 that has been reduced by the planetary gear mechanism 31 to the differential input gear 41 disposed on the second shaft A2 that is different from the first shaft A1 on which the rotor 12 and the planetary gear mechanism 31 are disposed. In this embodiment, the rotor 12, the planetary gear mechanism 31, and the transmission gear 32 are disposed on the first shaft A1 in the aforementioned order from the first side L1 of the axial direction to the second side L2 of the axial direction.

The planetary gear mechanism 31 includes a sun gear SG, a ring gear RG, a carrier CR, and a pinion gear PG. The sun gear SG is coupled to the rotor 12 in such a way as to rotate in an integrated manner. In this embodiment, the sun gear SG is coupled to the rotor shaft 12b in such a way as to rotate in an integrated manner. The ring gear RG is fixed to the case 9. In this embodiment, the pinion gear PG includes a first pinion gear PG1 and a second pinion gear PG2, and the carrier CR rotatably supports the first pinion gear PG1 and the second pinion gear PG2, which rotate in an integrated manner with each other, with a pinion shaft.

The first pinion gear PG1 meshes with the sun gear SG and the second pinion gear PG2 meshes with the ring gear RG. The second pinion gear PG2 is formed in such a way as to have a diameter smaller than that of the first pinion gear PG1. Each of the first pinion gear PG1 and the second pinion gear PG2 rotates about its own axis (the pinion shaft) and also revolves in conjunction with the carrier CR about the sun gear SG. A plurality of the first pinion gears PG1 as well as a plurality of the second pinion gears PG2 are provided spaced apart from each other along their own trajectory on which they individually revolve. The carrier CR is coupled to the transmission gear 32 in such a way as to rotate in an integrated manner. The transmission gear 32 is supported by a bearing that is not illustrated in FIG. 1 (which corresponds to a first supporting bearing B2 in the embodiment illustrated in FIG. 5) rotatably with respect to the case 9.

The differential input gear 41 meshes with the transmission gear 32. The differential input gear 41 is coupled to the differential case 40 to be described later in such a way as to rotate in an integrated manner. In this embodiment, the differential input gear 41 is formed in such a way as to have a diameter larger than that of the transmission gear 32. Therefore, in this embodiment, rotation of the carrier CR is reduced by meshing between the transmission gear 32 and the differential input gear 41 and transmitted to the differential case 40. In this embodiment, the differential input gear 41 is supported by bearings that are not illustrated in FIG. 1 (which correspond to a second supporting bearing B6 and a third supporting bearing B7 in the embodiment illustrated in FIG. 5) rotatably with respect to the case 9.

The differential gear device includes the differential input gear 41, the differential case 40 that is coupled to and rotates in an integrated manner with the differential input gear 41, and the differential gear mechanism 4 housed inside the differential case 40. The differential gear mechanism 4 includes a pair of differential pinion gears 42 and a pair of side gears 45. In this case, each of the pair of differential pinion gears 42 and the pair of side gears 45 is a bevel gear. The differential case 40 is a hollow member that accommodates the pair of differential pinion gears 42 and the pair of side gears 45. The differential case 40 is coupled to the differential input gear 41 in such a way as to rotate in an integrated manner and supported by bearings that are not illustrated in FIG. 1 (which correspond to the second supporting bearing B6 and the third supporting bearing B7 in the embodiment illustrated in FIG. 5) rotatably with respect to the case 9.

The pair of differential pinion gears 42 are disposed spaced apart in the radial direction R with respect to the second shaft A2 in such a way as to face against each other. The pair of differential pinion gears 42 are mounted on a differential pinion shaft 42a that is supported by the differential case 40 in such a way as to rotate in an integrated manner. The pair of differential pinion gears 42 are configured in such a way that each of the differential pinion gears 42 can rotate about the differential pinion shaft 42a and at the same time revolve about the second shaft A2. The side gears 45 mesh with the pair of differential pinion gears 42. The pair of side gears 45 are disposed in such a way as to rotate about the second shaft A2 as a rotation axis. A first side gear 43 of the pair of the side gears 45 is disposed on the first side L1 of the axial direction with respect to the differential pinion shaft 42a while a second side gear 44 is disposed on the second side L2 of the axial direction with respect to the differential pinion shaft 42a.

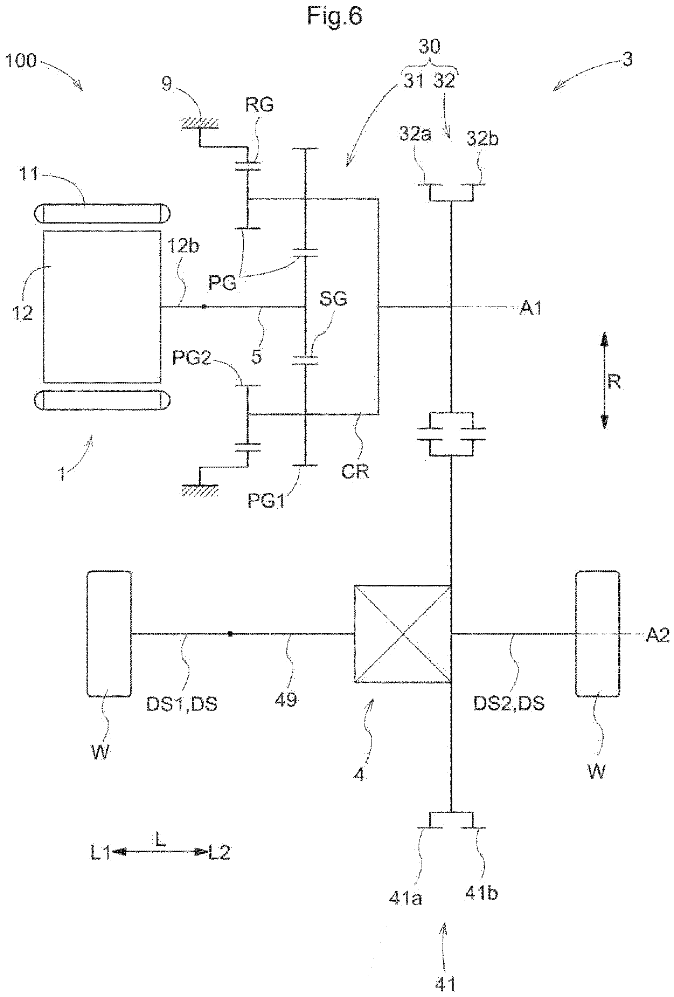

The pair of side gears 45 are individually coupled to a pair of drive shafts DS. The first side gear 43 is coupled to a first drive shaft DS1 and the second side gear 44 is coupled to the second drive shaft DS2. When the differential gear device includes a transmission shaft 49 that couples the side gears 45 with the drive shafts DS in the axial direction L as illustrated in the examples in FIG. 5 and FIG. 6, it can be considered that the drive shafts DS also includes the transmission shaft 49. As described above, in this embodiment, the side gears 45 correspond to the output members 2; however, the drive shafts DS or the transmission shaft 49 may be considered to be the output member 2.

In the vehicular driving device 100 as described above, a stator coil 11b of the rotating electric machine 1 (see FIG. 5) and the gears constituting the transmission mechanism 3 as well as the rotor 12 of the rotating electric machine 1 and the bearings that rotatably support the transmission mechanism 3 are lubricated (and also cooled) by the oil. In this embodiment, the oil accumulated in the oil accumulation section 81 that is formed on the lower side V2 of the case 9 is gathered by the differential input gear 41 and supplied to lubrication target portions such as the bearings. The oil accumulated in the oil accumulation section may be discharged by an oil pump (not illustrated) or the like and the discharged oil may be used for cooling the stator coil 11b of the rotating electric machine 1 and lubricating the bearings and the like.

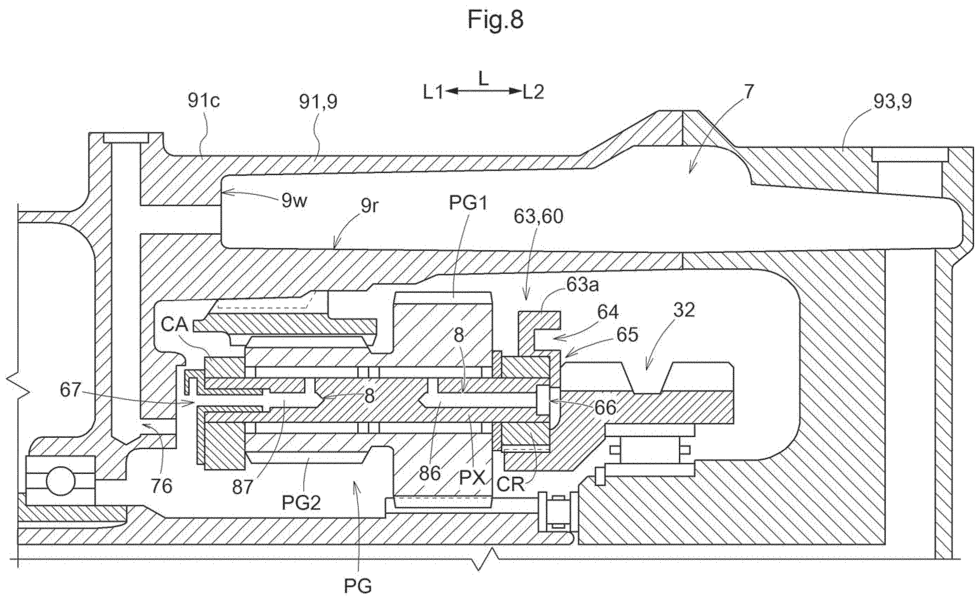

In order to appropriately guide the oil gathered by the differential input gear 41 to the lubrication target portions, the gathered oil may be temporarily stored. For this purpose, the vehicular driving device 100 according to this embodiment includes a catch tank 7 that temporarily stores the oil in the case 9 as an oil storage chamber. The case 9 is provided with a peripheral wall that surrounds the transmission mechanism accommodation chamber E3 in which the transmission mechanism 3 is housed (which corresponds to a second peripheral wall 91b in the embodiment illustrated in FIG. 5). As illustrated in FIG. 2, the catch tank 7 is formed in a region surrounded by the partition wall 9w that separates the rotating electric machine accommodation chamber and the transmission mechanism accommodation chamber E3, an inner surface 9a of the peripheral wall, and a guide wall 9r that is disposed inside the case 9 in such a way as to face against the peripheral wall (inner surface 9a) and surrounds at least one rotatable member of the transmission mechanism 3 and that separates the at least one rotatable member from the peripheral wall (inner surface 9a). The partition wall 9w corresponds to an inner surface of the partition wall 91c in the embodiments illustrated in figures such as FIG. 5 and FIG. 8.

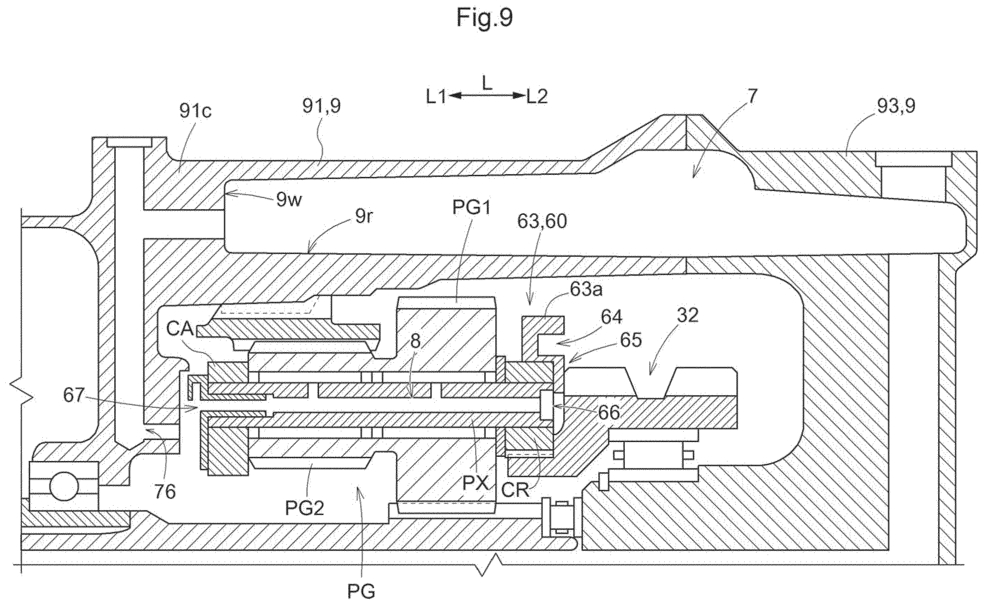

A case cover, which is not illustrated in figures such as FIG. 2 and FIG. 3, that faces against the partition wall 9w when viewed along the axial direction L (which corresponds to a third case member 93 in the embodiment illustrated in FIG. 5) is disposed and the catch tank 7 is formed in a space surrounded by the partition wall 9w, the guide wall 9r, and a wall surface of the case cover. The catch tank 7 is connected to an oil passage for supplying oil to various types of bearings, rotation shafts, and the like (for example, an oil supply passage 76 in embodiments illustrated in FIG. 8 and FIG. 9), and the oil that has been temporarily stored in the catch tank 7 is supplied via the oil passage to the lubrication target portions. In addition, a discharging section 79 is formed below the catch tank 7 and excess oil is discharged through this discharging section 79 to the oil accumulation section 81 in a lower part of the case 9.

The static oil level Ps indicated in FIG. 2 and FIG. 3 denotes the highest oil level in the case 9 when the differential input gear 41 is stopped. The lowest dynamic oil level Pd denotes the lowest oil level in the case 9 after the oil gathered by rotation of the differential input gear 41 circulates in the case 9, the oil is stored in the catch tank 7, or the like. Even at the lowest dynamic oil level Pd, teeth of the differential input gear 41 are soaked in the oil, which enables oil to be appropriately gathered by the differential input gear 41. Below the guide wall 9r on the radially inner side R1, a second oil accumulation section 82 is formed. A function of the second oil accumulation section 82 is described later.

In FIG. 2, a reference sign "C1" denotes a differential first rotation direction C1, which is a rotation direction of the differential input gear 41 when the wheel W rotates in a first side. When the differential input gear 41 rotates in the differential first rotation direction C1, the oil gathered by the differential input gear 41 is introduced through a first introduction path K1 into the catch tank 7. In the first introduction path K1, a first feeding port 71 is formed. The first feeding port 71 is disposed between the guide wall 9r and the peripheral wall (inner surface 9a) in the upward or downward direction V and opens toward a side on which an upper end H4 of the differential input gear 41 is located. Therefore, the oil gathered by the differential input gear 41 is appropriately guided to the catch tank 7.

However, when the wheel W rotates in a second side opposite to the first side, the differential input gear 41 rotates in a differential second rotation direction C2 (see FIG. 3) that is opposite to the differential first rotation direction C1. In this case, since a direction in which the first feeding port 71 opens and a direction in which oil is scattered from the differential input gear 41 near the first feeding port 71 are approximately the same, oil can be hardly introduced through the first introduction path K1 into the catch tank 7. The vehicular driving device 100 according to this embodiment is configured in such a way that oil can be appropriately introduced into the catch tank 7 by means of rotation of the rotatable member included in the transmission mechanism 3 even in such a case.

As described above, the transmission mechanism 3 includes: the differential input gear 41 that is disposed coaxially with the pair of output members 2 on the second shaft A2 and to which the driving force from the rotating electric machine 1 serving as the drive source is transmitted; and the differential gear mechanism 4 that distributes the driving force transmitted to the differential input gear 41 to the pair of output members 2. The transmission mechanism 3 further includes a gear mechanism 30 disposed on a shaft (the first shaft A1) that is different from those for the pair of output members 2. Among rotatable members included in the gear mechanism 30, a rotatable member that rotates in a direction opposite to the differential input gear 41 is referred to as a target rotating body 6. In other words, the transmission mechanism 3 at least includes the differential input gear 41, the differential gear mechanism 4, and the target rotating body 6. The carrier CR and the transmission gear 32 that serve as output elements of the planetary gear mechanism 31 may function as the target rotating body 6. In this embodiment, an embodiment in which the carrier CR corresponds to the target rotating body 6 is described by way of example.

While details are to be described later, as illustrated in FIG. 2 and FIG. 3, the target rotating body 6 is provided with a gathering section 60 for gathering oil being formed along a circumference of the target rotating body 6. In this embodiment, the gathering section 60 is constructed as a group of protruding sections 62 that consists of a plurality of protruding sections 61 arranged along the circumference of the target rotating body 6. The gathering section 60 (in this case, the protruding sections 61) may be arranged at even intervals on the entire circumference of the target rotating body 6 or may be arranged intermittently on a part of the circumference as illustrated in FIG. 2 and FIG. 3.

In this case, the shaft on which a rotation axis of the target rotating body 6 is placed (in this case, the first shaft A1) is assumed as a target shaft. It is also assumed that a rotational state of the transmission mechanism 3 when the wheel W rotates in the first side is a first rotational state, and a rotational state of the transmission mechanism 3 when the wheel W rotates in the second side opposite to the first side is a second rotational state. When the wheel W rotates in the first side as described above, the rotation direction of the differential input gear 41 is, as illustrated in FIG. 2, the differential first rotation direction C1. When the wheel W rotates in the second side opposite to the first side, the rotation direction of the differential input gear 41 is, as illustrated in FIG. 3, the differential second rotation direction C2. Therefore, when the differential input gear 41 rotates in the differential first rotation direction C1, the rotational state of the transmission mechanism 3 is the first rotational state and when the differential input gear 41 rotates in the differential second rotation direction C2, the rotational state of the transmission mechanism 3 is the second rotational state.

As is obvious from FIG. 1, the differential input gear 41 meshes with the transmission gear 32, and the transmission gear 32 and the carrier CR rotate in an integrated manner. Therefore, the carrier CR serving as the target rotating body 6 rotates in a direction opposite to the differential input gear 41. In other words, as illustrated in FIG. 2, when the differential input gear 41 rotates in the differential first rotation direction C1, the target rotating body 6 in the first rotational state rotates in a target first rotation direction C10 opposite to the differential first rotation direction C1. As illustrated in FIG. 3, when the differential input gear 41 rotates in the differential second rotation direction C2, the target rotating body 6 in the second rotational state rotates in a target second rotation direction C20 opposite to the differential second rotation direction C2.

As described above, the case 9 is provided with the guide wall 9r that surrounds the target rotating body 6. The guide wall 9r may be integrally formed with another section in the case 9 (for example, the partition wall 9w), or may be formed as a member separate from other sections in the case 9. In this embodiment, the guide wall 9r is formed in such a way as to surround the carrier CR. Assuming the shaft in which the rotation axis of the target rotating body 6 is placed, that is, the first shaft A1 serving as a rotation axis of the carrier CR as the target shaft, in the radial direction R with respect to the target shaft, the catch tank 7 is provided on the radially outer side R2 with respect to the guide wall 9r.

The catch tank 7 is provided with the first introduction path K1 through which the oil scattered from the differential input gear 41 is introduced in the first rotational state and a second introduction path K2 through which oil scattered from the gathering section 60 of the target rotating body 6 is introduced in the second rotational state. Oil is introduced into the catch tank 7 through the first introduction path K1 or the second introduction path K2 depending on a rotation direction of the wheel W. The first feeding port 71 is disposed in the first introduction path K1, and a second feeding port 72 is disposed in the second introduction path K2. In other words, the catch tank 7 is provided with the first feeding port 71 through which the oil scattered from the differential input gear 41 is introduced in the first rotational state and the second feeding port 72 through which the oil scattered from the group of protruding sections 62 of the target rotating body 6 is introduced in the second rotational state.

As described above, the first feeding port 71 is formed in such a way that it is disposed between the guide wall 9r and the peripheral wall (inner surface 9a) in the upward or downward direction V and opens toward the side on which the upper end H4 of the differential input gear 41 is located, in other words, opens toward the second side Y2 of the arrangement direction in this embodiment. In this embodiment, the first feeding port 71 is disposed on the upper side V1 with respect to the differential input gear 41, and on a side on which the axis of the target rotating body 6 (in this case, the first shaft A1) is disposed with respect to the axis of the differential input gear 41 (in this case, the second shaft A2). Although FIG. 3 illustrates the embodiment in which the first feeding port 71 opens on the upper side V1 with respect to the upper end H4 of the differential input gear 41, the first feeding port 71 may be disposed on a side on which the target rotating body 6 is disposed with respect to the second shaft A2 serving as the axis of the differential input gear 41 (the first side Y1 of the arrangement direction) and on the upper side V1 with respect to the second shaft A2. In addition, the second feeding port 72 is formed in such a way as to penetrate through the guide wall 9r in the radial direction R with respect to the target shaft.

The guide wall 9r is disposed in such a way as to face against the peripheral wall (inner surface 9a) that surrounds the transmission mechanism accommodation chamber E3 from inside the transmission mechanism accommodation chamber E3. As illustrated in figures such as FIG. 2, the upper end H4 of the differential input gear 41 is located on the upper side V1 with respect to an upper end H6 of the target rotating body 6. The first introduction path K1 includes the first feeding port 71 that is disposed between the guide wall 9r and the peripheral wall (inner surface 9a) in the upward or downward direction V and opens toward the side on which the upper end H4 of the differential input gear 41 is located.

Since the guide wall 9r surrounds the target rotating body 6, when the upper end H4 of the differential input gear 41 is located on the upper side V1 with respect to the upper end H6 of the target rotating body 6, the upper end H4 of the differential input gear 41 may be easily disposed closer in the upward or downward direction V to a position of the guide wall 9r on a side of the differential input gear 41. In addition, the first feeding port 71 for introducing the oil gathered by the differential input gear 41 through the first introduction path K1 into the catch tank 7 is disposed between the guide wall 9r and the peripheral wall (inner surface 9a) in the upward or downward direction V and opens toward the side on which the upper end H4 of the differential input gear 41 is located. Therefore, the oil gathered by the differential input gear 41 can be easily guided to the catch tank 7.

As described above with reference to FIG. 3, when the differential input gear 41 rotates in the differential second rotation direction C2 and the transmission mechanism 3 is in the second rotational state, the target rotating body 6 rotates in the target second rotation direction C20 opposite to the differential second rotation direction C2. The oil that has been gathered by the gathering section 60 of the carrier CR serving as the target rotating body 6 is introduced into the catch tank 7 through the second feeding port 72 formed in such a way as to penetrate through the guide wall 9r.

In this embodiment, the second feeding port 72 is disposed on a side opposite to a side on which the second shaft A2 serving as the axis of the differential input gear 41 is disposed with respect to the axis of the target rotating body 6 (in this case, the first shaft A1 serving as the axis of the carrier CR) and on the upper side V1 with respect to the axis of the target rotating body 6 (in this case, the first shaft A1). In other words, the second introduction path K2 includes the second feeding port 72 that is disposed on the first side Y1 of the arrangement direction with respect to the first shaft A1 and on the upper side V1 with respect to the first shaft A1. Thus, oil scattered from the upper end H6 of the target rotating body 6 that is rotating in the target second rotation direction C20 can be easily guided through the second feeding port 72 to the catch tank 7.

In other words, since the second feeding port 72 is provided on a side opposite to a side on which the axis of the differential input gear 41 (in this case the second shaft A2) is disposed with respect to the axis of the target rotating body 6 (in this case the first shaft A1), oil gathered by the target rotating body 6 can be directed, when viewed from the axial direction, to approximately the same direction as the direction to which the oil gathered by the differential input gear 41 is directed when the wheel W rotates in the first side. In other words, both the oil from the differential input gear 41 and the oil from the target rotating body 6 can be easily introduced into the same catch tank 7. A relatively larger portion of the oil that has been gathered by the target rotating body 6 is scattered near the upper end H6 of the target rotating body 6. Since the second feeding port 72 is disposed on the upper side V1 with respect to the axis of the target rotating body 6 (first shaft A1), the oil scattered from the target rotating body 6 can be easily introduced through the second feeding port 72 into the catch tank 7. In addition, since the second feeding port 72 is disposed on the upper side V1 with respect to the axis of the target rotating body 6 (first shaft A1), the catch tank 7 may be easily disposed on the upper side V1 in the case 9, which enables oil to be easily guided to the lubrication target portions.

When the oil level in the case 9 is at the static oil level Ps, the gathering section 60 of the target rotating body 6 is located on the lower side V2 with respect to the static oil level Ps, and oil can be gathered by the target rotating body 6. However, when the oil level is at the lowest dynamic oil level Pd, the gathering section 60 of the target rotating body 6 is located on the upper side V1 with respect to the lowest dynamic oil level Pd, and oil cannot be gathered by the target rotating body 6. In this embodiment, the second oil accumulation section 82 is formed below the guide wall 9r on the radially inner side R1. The second oil accumulation section 82 is provided with a third feeding port 83 that opens toward the differential input gear 41 in such a way that the oil gathered by the differential input gear 41 in the second rotational state is introduced through the third introduction path K3.

In other words, the vehicular driving device 100 includes, in addition to the oil accumulation section 81 (the first oil accumulation section) formed in the lower part of the case 9, the second oil accumulation section 82 for temporarily storing oil in the case 9 that is formed below the guide wall 9r on the radially inner side R1. The second oil accumulation section 82 is provided with the third introduction path K3 through which the oil scattered from the differential input gear 41 is introduced in the second rotational state. The third introduction path K3 includes the third feeding port 83. The second oil accumulation section 82 may be referred to as a second catch tank.

As described above, even when the oil level is at the lowest dynamic oil level Pd, the differential input gear 41 can gather oil, and the oil gathered by the differential input gear 41 is introduced through the third feeding port 83 into the second oil accumulation section 82. The oil that has been stored in the second oil accumulation section 82 is gathered by the gathering section 60 of the target rotating body 6, and introduced through the second feeding port 72 into the catch tank 7.

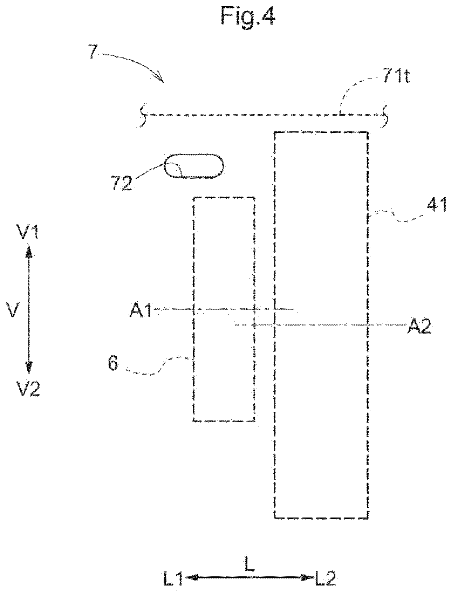

In this embodiment, as illustrated in FIG. 4, an arrangement area for the second feeding port 72 in the axial direction L and an arrangement area for the differential input gear 41 in the axial direction L are disposed in such a way as not to overlap with each other. In FIG. 4, a reference sign "71t" denotes an end of the guide wall 9r constituting the catch tank 7 on the side of the differential input gear 41 (the second side Y2 in the arrangement direction). The end 71t is also an end of the first feeding port 71 on the lower side V2, and oil scattered toward the upper side V1 with respect to the end 71t is introduced into the catch tank 7.

In this embodiment, the target rotating body 6 is the carrier CR of the planetary gear mechanism 31. The differential input gear 41 meshes with the transmission gear 32 that is disposed coaxially with the carrier CR and rotates in an integrated manner with the carrier CR, and the arrangement area for the differential input gear 41 and an arrangement area for the transmission gear 32 overlap with each other in the axial direction L. The arrangement area for the transmission gear 32 and the arrangement area for the carrier CR that is coaxially disposed with the transmission gear 32 do not overlap with each other in the axial direction L, and the arrangement areas for the differential input gear 41 and the carrier CR do not overlap with each other in the axial direction L. Therefore, the oil gathered by the rotation of the differential input gear 41 and oil gathered by the rotation of the carrier CR are scattered toward the catch tank 7 around different positions in the axial direction L. The oil introduced into the catch tank 7 through the first feeding port 71 and the oil introduced into the catch tank 7 through the second feeding port 72 flow along the guide wall 9r around different positions in the axial direction L as the centers of the flow.

An area in the axial direction L in which the oil flowing along the guide wall 9r that has been gathered by the differential input gear 41 and introduced into the catch tank 7 flows substantially overlaps with the arrangement area for the differential input gear 41 in the axial direction L. When the arrangement area for the second feeding port 72 in the axial direction L and the arrangement area for the differential input gear 41 in the axial direction L overlap with each other, the second feeding port 72 coincides with the flow of the oil that has been gathered by the differential input gear 41 and flows along the guide wall 9r, and the oil introduced into the catch tank 7 may easily flow out from the second feeding port 72. When the arrangement area for the second feeding port 72 in the axial direction L and the arrangement area for the differential input gear 41 in the axial direction L are disposed in such a way as not to overlap with each other, an amount of oil that flows out from the second feeding port 72 when the wheel W rotates in the first side can be reduced, which enables a sufficient amount of oil to be easily stored in the catch tank 7.

As described above, the target rotating body 6 is provided with the gathering section 60 being formed along the circumference of the target rotating body 6. When each portion of the gathering section 60 (each of the protruding sections 61 of the group of protruding sections 62) has a shape at the circumference of the target rotating body 6 that is inclined in a circumferential direction along the axial direction L, which is a twisted shape as in a so-called helical tooth, oil can be easily scattered according to a direction of the inclination. For example, as illustrated in FIG. 4, the second feeding port 72 may be easily separated in such a way that the arrangement area for the second feeding port 72 in the axial direction L does not overlap with the arrangement area for the differential input gear 41 in the axial direction L. In an example illustrated in FIG. 4, the arrangement area for the target rotating body 6 in the axial direction L is disposed in such a way as not to completely overlap, while partially overlapping, with the arrangement area for the second feeding port 72 in the axial direction L. Specifically, the arrangement area for the second feeding port 72 in the axial direction is disposed in such a way as to overlap with the arrangement area for the target rotating body 6 in the axial direction L on the second side L2 of the axial direction, that is, on the side of the arrangement area for the differential input gear 41 in the axial direction L, and in such a way as not to overlap with the arrangement area for the target rotating body 6 in the axial direction L on the first side L1 of the axial direction, that is, on a side opposite to the arrangement area for the differential input gear 41 in the axial direction L. In other words, the arrangement area for the second feeding port 72 in the axial direction L is disposed with an offset with respect to the arrangement area for the target rotating body 6 in the axial direction L toward the first side L1 of the axial direction in such a way as to be separated from the arrangement area for the differential input gear 41 in the axial direction L. Thus, when there is a deviation between the arrangement area for the target rotating body 6 in the axial direction L and the arrangement area for the second feeding port 72 in the axial direction L, by forming the protruding sections 61 with a helical tooth shape, oil can be easily guided to the second feeding port 72 due to the direction of inclination of the helical tooth. As is obvious, the protruding sections 61 may have a shape that is in parallel with the axial direction L on the circumference of the target rotating body 6.

As illustrated in FIG. 2 and FIG. 3, the guide wall 9r extends to a position that separates the target rotating body 6 from the differential gear mechanism 4. A communication opening 74 may be formed in a section of the guide wall 9r that separates the target rotating body 6 from the differential gear mechanism 4 in such a way that a side of the target rotating body 6 with respect to the guide wall 9r communicates with a side of the differential gear mechanism 4 with respect to the guide wall 9r. In other words, the vehicular driving device 100 may be provided with a fourth introduction path for supplying the oil scattered from the gathering section 60 of the target rotating body 6 in the second rotational state to the side of the differential gear mechanism 4, and the fourth introduction path K4 may include the communication opening 74.

With this configuration, when the wheel W rotates in the second side, a portion of oil gathered by the group of protruding sections 62 of the target rotating body 6 can be supplied to the side of the differential gear mechanism 4. Therefore, the differential gear mechanism 4 can be easily and appropriately lubricated when the wheel W rotates in the second side.

A second example of the vehicular driving device 100 is described below. FIG. 5 is a cross-sectional view illustrating the second example of the vehicular driving device 100 while FIG. 6 is a skeleton diagram of the second example of the vehicular driving device 100. While details are to be described later, except that the transmission gear 32 and the differential input gear 41 are individually constructed of two teeth sections, basic configurations are similar to those in the embodiment described above with reference to FIG. 1. Therefore, in embodiments similar to the embodiment described above, the same reference signs are used and descriptions thereof are omitted.

As illustrated in FIG. 5, the case 9 includes a first case member 91, a second case member 92 joined to the first case member 91 on the first side L1 of the axial direction, and a third case member 93 joined to the first case member 91 on the second side L2 of the axial direction. The first case member 91 is provided with a first peripheral wall 91a, a second peripheral wall 91b, and a partition wall 91c.

The first peripheral wall 91a is formed in such a way as to cover the rotating electric machine 1 from outside in the radial direction R. The second peripheral wall 91b is formed in such a way as to cover the planetary gear mechanism 31 and the differential gear mechanism 4 from outside in the radial direction R. The partition wall 91c is formed in such a way as to separate a space inside the first peripheral wall 91a from a space inside the second peripheral wall 91b in the axial direction L. In this embodiment, the first peripheral wall 91a is disposed on the first side L1 of the axial direction with respect to the partition wall 91c and the second peripheral wall 91b is disposed on the second side L2 of the axial direction with respect to the partition wall 91c. The first peripheral wall 91a is formed into a tubular shape that opens toward the first side L1 of the axial direction and the second peripheral wall 91b is formed into a tubular shape that opens toward the second side L2 of the axial direction.

The second case member 92 is provided with a first side wall 92a. The first side wall 92a is formed in such a way as to cover the rotating electric machine 1 from the first side L1 of the axial direction. In this embodiment, the second case member 92 is joined to the first case member 91 on the first side L1 of the axial direction in such a way that an opening of the first peripheral wall 91a on the first side L1 of the axial direction is covered by the first side wall 92a.

The third case member 93 is provided with a second side wall 93a. The second side wall 93a is formed in such a way as to cover the transmission mechanism 3 and the differential gear mechanism 4 from the second side L2 of the axial direction. In this embodiment, the third case member 93 is joined to the first case member 91 on the second side L2 of the axial direction in such a way that an opening of the second peripheral wall 91b on the second side L2 of the axial direction is covered by the second side wall 93a.

The stator 11 of the rotating electric machine 1 includes a cylindrical stator core 11a. The stator core 11a is fixed to the first peripheral wall 91a of the case 9 serving as a non-rotatable member. The rotor 12 of the rotating electric machine 1 includes a cylindrical rotor core 12a. The rotor core 12a is supported rotatably with respect to the stator core 11a. As illustrated in FIG. 5, the rotor 12 includes a rotor shaft 12b coupled to the rotor core 12a in such a way as to rotate in an integrated manner. The stator coil 11b is wound around the stator core 11a. In this embodiment, the stator coil 11b is wound around the stator core 11a in such a way that a pair of coil end sections protruding relative to the stator core 11a toward both sides of the axial direction L are formed. Although illustration is omitted, a permanent magnet is provided on the rotor core 12a.

In the embodiment illustrated in FIG. 5, the case 9 accommodates an inverter device 20 that drives and controls the rotating electric machine 1 and includes the catch tank 7 for storing oil gathered by the rotatable member included in the transmission mechanism 3. Specifically, the case 9 includes an accommodation chamber forming section 91f that forms an accommodation chamber for the inverter device 20 and a fourth case member 94 joined to the accommodation chamber forming section 91f in such a way as to cover an opening of the accommodation chamber. The inverter device 20 is housed in a space surrounded by the accommodation chamber forming section 91f and the fourth case member 94. In the embodiment illustrated in FIG. 5, the first case member 91 is provided with the accommodation chamber forming section 91f. The inverter device 20 includes, for example, a power module 21 in which a plurality of elements (such as switching elements) constituting an inverter circuit are modularized and an output busbar 22 for outputting AC power from the power module 21. The output busbar 22 is electrically connected via a terminal block T to a power cable 13 that is drawn from the coil end section.

As illustrated in FIG. 5, the rotor shaft 12b is formed into a tubular shape having an axis that extends along the axial direction L and disposed in such a way as to protrude from the rotor core 12a toward both sides in the axial direction L. A section of the rotor shaft 12b protruding from the rotor core 12a toward the first side L1 of the axial direction is supported by the first rotor bearing B11 rotatably with respect to the first side wall 92a of the case 9. A section of the rotor shaft 12b protruding from the rotor core 12a toward the second side L2 of the axial direction is supported by the second rotor bearing B12 rotatably with respect to the partition wall 91c of the case 9. When the first rotor bearing B11 and the second rotor bearing B12 that rotatably support the rotor shaft 12b are not distinguished, they are referred to as a "rotor bearing".

The sun gear SG of the planetary gear mechanism 31 is coupled to the input shaft 5 in such a way as to rotate in an integrated manner with the rotor 12. In the example illustrated in FIG. 5, the input shaft 5 and the sun gear SG are integrally constructed. The input shaft 5 and the rotor shaft 12b are coupled by abutting an enlarged-diameter section 52 of the input shaft 5 on the first side L1 of the axial direction onto an end of the rotor shaft 12b on the second side L2 of the axial direction and spline-fitting a connecting section 51 of the input shaft 5 into the radially inner side R1 of the rotor shaft 12b.

Similarly to the embodiment described above with reference to FIG. 1, the differential input gear 41 meshes with the transmission gear 32. As illustrated in FIG. 5 and FIG. 6, in the second example of the vehicular driving device 100, each of the transmission gear 32 and the differential input gear 41 is provided with a pair of teeth sections (meshing sections), and the teeth sections in each pair are twisted in directions opposite to each other. Specifically, the transmission gear 32 is provided with a first meshing section 32a and a second meshing section 32b, and twisted directions of the teeth sections are different from each other. The differential input gear 41 is provided with a third meshing section 41a and a fourth meshing section 41b, and twisted directions of the teeth sections are different from each other. The first meshing section 32a meshes with the third meshing section 41a while the second meshing section 32b meshes with the fourth meshing section 41b. The "twisted direction of the teeth section" here means a direction in which the teeth section of the gear concerned is twisted with respect to an axis of the gear. In the second example of the vehicular driving device 100, compared to a configuration in which the transmission gear 32 and the differential input gear 41 are configured to be a simple helical gear, the vehicular driving device 100 is configured in such a way that thrust force generated by meshing between the transmission gear 32 and the differential input gear 41 may be reduced.

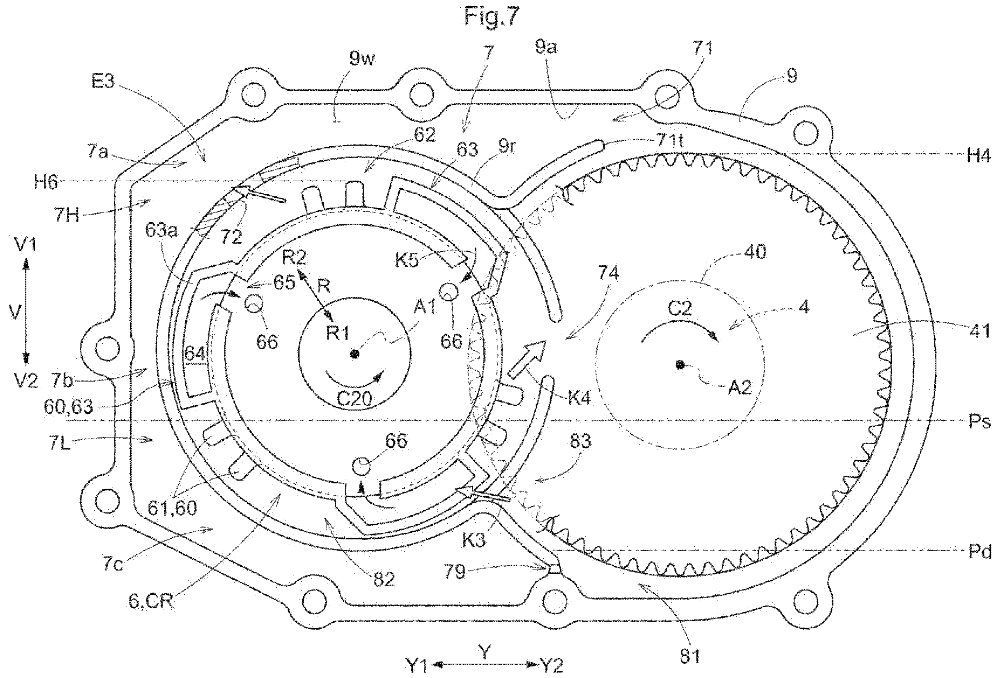

The second example of the vehicular driving device 100 also includes, as illustrated in FIG. 5 and FIG. 7, the catch tank 7 that temporarily stores the oil in the case 9. As illustrated in FIG. 7, the carrier CR serving as the target rotating body 6 has the gathering section 60 being formed along the circumference of the target rotating body 6 while in the embodiments described above with reference to figures such as FIG. 2 and FIG. 3, the embodiments have been described by way of example in which the group of protruding sections 62 consisting of a plurality of the protruding sections 61 provided along the circumference of the target rotating body 6 are provided as the gathering section 60. The second example of the vehicular driving device 100 is provided with, as illustrated in FIG. 7, a second protruding section 63 in addition to the protruding sections 61. When the protruding sections 61 are distinguished from the second protruding section 63, the protruding sections 61 may be referred to as "first protruding sections".

The second protruding section 63 is provided with a cover section 63a that covers a part of the target rotating body 6 in the circumferential direction from the radially outer side R2, and a surrounded space 64 is formed between a surface of the target rotating body 6 on the radially outer side R2 and the cover section 63a. The cover section 63a prevents oil from being scattered toward the radially outer side R2 due to centrifugal force generated by rotation of the target rotating body 6, which enables the oil to be easily accumulated in the surrounded space 64. On the radially inner side R1 of the surrounded space 64, a guiding opening 65 that opens toward the radially inner side R1 and communicates with an end face of the target rotating body 6 on the second side L2 of the axial direction is formed. Oil being gathered by the second protruding section 63 serving as the gathering section 60 and guided to the surrounded space 64 is guided through the guiding opening 65 into an opening (i.e., a second opening 66 to be described later) formed on the end face of the target rotating body 6 on the second side L2 of the axial direction.

As described above, the carrier CR includes a plurality of pinion shafts each of which rotatably supports each of the pinion gears. As illustrated in FIG. 8, the carrier CR is provided with a lubricating oil passage 8 that communicates with portions requiring lubrication of the pinion gears PG (planetary gears) and the pinion shafts PX (gear shafts). The portions requiring lubrication are, for example, a bearing located between the pinion shaft PX and the pinion gear PG, or a teeth section of the pinion gear PG. The lubricating oil passage 8 may be formed in the pinion shaft PX. An end of the lubricating oil passage 8 on the second side L2 of the axial direction opens, and an opening (second opening 66) is formed on an end face of the pinion shaft PX on the second side L2 of the axial direction, that is, an end face of the carrier CR on the second side L2 of the axial direction. The oil gathered by the gathering section 60, in particular, the oil gathered by the second protruding section 63 is guided by means of rotation of the carrier CR through the opening (second opening 66) to the lubricating oil passage 8. The second protruding section 63 serves as a guiding section for guiding the gathered oil to the lubricating oil passage 8. In other words, in the embodiment illustrated in FIG. 7, it may be considered that the gathering section 60 includes the guiding section that guides the gathered oil by means of rotation of the carrier CR to the lubricating oil passage 8.

With the configuration as described above, a portion of the oil gathered by the gathering section 60 can be directly guided by the guiding section (second protruding section 63) of the gathering section 60 to the lubricating oil passage 8 without being routed through the catch tank 7. Thus, oil can be quickly supplied to the lubrication target portions.

Oil is also supplied through the catch tank 7 to the lubricating oil passage 8. As illustrated in FIG. 8, the lubricating oil passage 8 formed in the pinion shaft PX that is disposed along the axial direction L may include a first lubricating oil passage 87 located on the first side L1 of the axial direction and a second lubricating oil passage 86 located on the second side L2 of the axial direction. The opening (second opening 66) into which the oil gathered by the second protruding section 63 of the gathering section 60 is introduced is provided in the second lubricating oil passage 86. An end of the first lubricating oil passage 87 on the first side L1 of the axial direction also opens, and a first opening 67 is formed on an end face of the pinion shaft PX on the first side L1 of the axial direction, that is, an end face of the carrier CR on the first side L1 of the axial direction. The first opening 67 is supplied with the oil that has been stored in the catch tank 7 through the oil supply passage 76 that communicates with the catch tank 7.

As described above, it is configured in such a way that the lubricating oil passage 8 is provided with the first opening 67 that opens toward the first side L1 of the axial direction and the second opening 66 that opens toward the second side L2 of the axial direction, the oil from the catch tank 7 is supplied to the first opening 67, and the second protruding section 63 (guiding section) guides the oil to second opening 66.

With the configuration as described above, a portion of the oil that has been stored in the catch tank 7 can be supplied to the first lubricating oil passage 87, and at the same time, the oil gathered by the gathering section 60 can be directly supplied to the second lubricating oil passage 86 without being routed through the catch tank 7. Thus, oil can be easily and stably supplied to the portions requiring lubrication of the pinion gears PG (planetary gears) and the pinion shafts PX (gear shafts). Although oil to be introduced into the catch tank 7 tends to decrease in a condition in which viscosity of the oil is high, such as cold environment, oil can be easily and stably supplied to the lubrication target portions even in such a case.

In the example above, the embodiment has been described by way of example with reference to FIG. 8 in which the lubricating oil passage 8 includes the first lubricating oil passage 87 and the second lubricating oil passage 86. However, the lubricating oil passage 8 may be constructed, as illustrated in FIG. 9, as a continuous oil passage in which the first opening 67 and the second opening 66 are communicated with each other.

When it is configured in this manner in which oil is supplied in the second rotational state from both the first opening 67 and the second opening 66, oil can be appropriately and easily supplied to the lubrication target portions whether viscosity of the oil is high or low. For example, when a temperature of the oil is high and the oil can be easily introduced into the catch tank 7, the oil can be easily supplied through the first opening 67. However, when the temperature of the oil is low and an amount of the oil to be introduced into the catch tank 7 decreases, an amount of the oil to be supplied through the first opening 67 to the lubrication target portions also decreases. In addition, when the temperature of the oil is low, flowability of the oil is also reduced, and the oil tends to be accumulated around the gathering section 60. Therefore, the oil can be easily guided by means of the second protruding section 63 to the second opening 66.

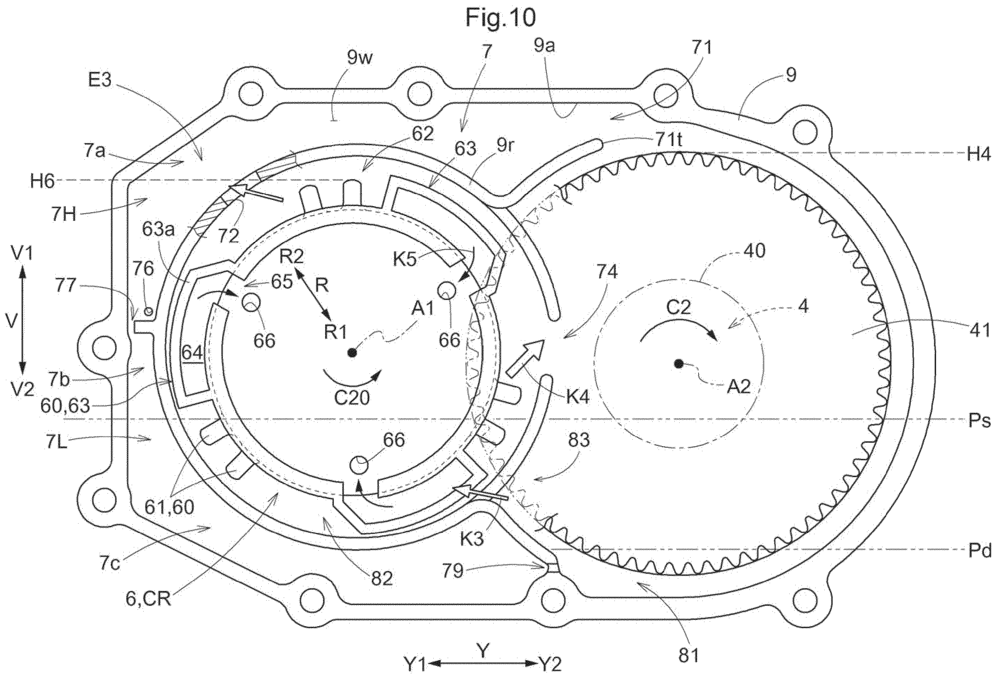

In FIG. 7, the embodiment is illustrated in which the catch tank 7 includes an upper region 7a located on the upper side V1 with respect to the gear mechanism 30 (in particular, the carrier CR of the planetary gear mechanism 31), a lower region 7c located on the lower side V2 with respect to the carrier CR, and a connecting region 7b disposed on the radially outer side R2 with respect to the carrier CR in such a way as to connect the upper region 7a with the lower region 7c, and all of these regions are continuously formed. Although reference signs denoting these regions are not assigned, the embodiments illustrated in FIG. 2 and FIG. 3 are similar. However, the catch tank 7 may be divided into and constructed of, as illustrated in FIG. 10, an upper catch tank 7H that includes the entire upper region 7a and a part of the connecting region 7b on the upper side V1 and a lower catch tank 7L that includes the entire lower region 7c and a part of the connecting region 7b on the lower side V2.

The first feeding port 71 is provided in the upper catch tank 7H, and oil is introduced through the first introduction path K1 into the upper catch tank 7H. As illustrated in FIG. 10, for delivering oil toward the first opening 67 of the lubricating oil passage 8, the oil supply passage 76 communicates with a lower part of the upper catch tank 7H. In addition, the discharging section 79 for discharging oil to the oil accumulation section 81 in the lower part of the case 9 is provided in a lower part of the lower catch tank 7L. It is noted here that the upper catch tank 7H communicates with the lower catch tank 7L through a connecting oil passage 77 serving as a throttle. A flow rate is set for the connecting oil passage 77 in such a way that the connecting oil passage 77 allows a smaller amount of oil to flow from the upper catch tank 7H into the lower catch tank 7L, wherein the amount is smaller than that being introduced by the differential input gear 41 and the gathering section 60 into the upper catch tank 7H.

In other words, the oil that has been introduced into the upper catch tank 7H is stored for a moment in the upper catch tank 7H, and subsequently flows through the connecting oil passage 77 serving as the throttle into the lower catch tank 7L. Therefore, it is easy to secure and supply a sufficient amount of oil from the upper catch tank 7H through the oil supply passage 76 and the lubricating oil passage 8 to portions requiring lubrication. In addition, since the amount of oil to flow into the lower catch tank 7L is limited, a time for the oil that has been gathered by the differential input gear 41 and the gathering section 60 to be discharged from the discharging section 79 and return to the oil accumulation section 81 may be extended. Therefore, while the vehicle is traveling, an oil level of the oil gathered by the differential input gear 41 and the like may be easily controlled at a low level, and energy loss due to resistance to stirring of the oil may be easily controlled at a low level.

Although illustration in figures such as FIG. 7 is omitted, when the catch tank 7 is not divided into and constructed of the upper catch tank 7H and the lower catch tank 7L in this manner, the oil supply passage 76 may communicate with the connecting region 7b of the catch tank 7.

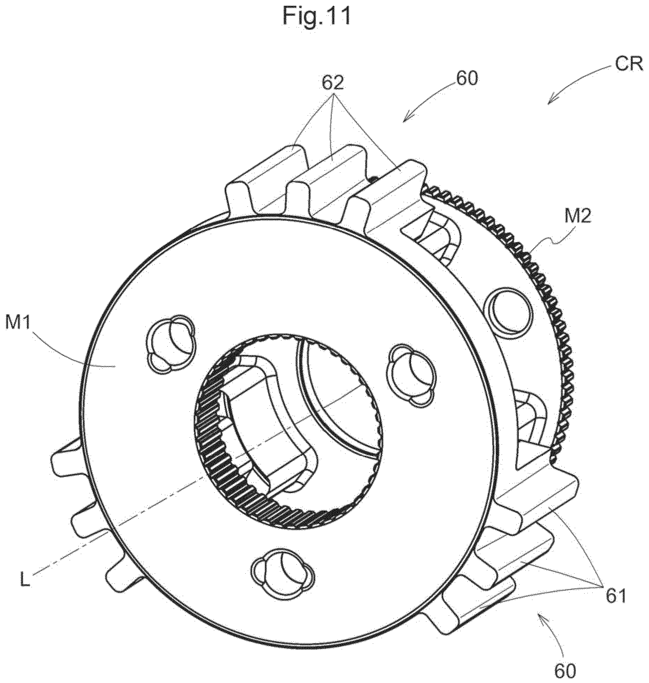

The target rotating body 6 may be a sintered body, which may be formed by integrating a section serving as the carrier CR of the planetary gear mechanism 31 with a section serving as the gathering section 60. FIG. 11 illustrates an embodiment in which the carrier CR is integrated with the protruding sections 61 serving as the gathering section 60 by means of sintering. It is noted here that in the embodiment is illustrated in which the gathering section 60 is constructed of the first protruding sections (protruding sections 61).

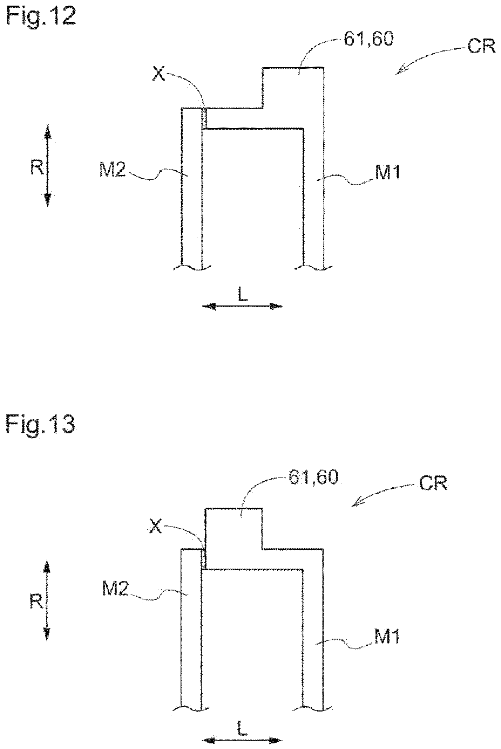

In an example illustrated in FIG. 11, the carrier CR is integrally formed by joining a first member M1 and a second member M2 with a brazing material X (see FIG. 12 and FIG. 13) during a sintering process. In the carrier CR, the first member M1 serves as a case that accommodates the pinion gear PG while the second member M2 serves as a lid joined to the first member M1. The pinion gear PG is housed in an accommodation space formed by the first member M1 and the second member M2.

FIG. 11 to FIG. 13 illustrates embodiments in which the protruding sections 61 serving as the gathering section 60 are formed in the first member M1. The second member M2 is provided with a brazing material insertion hole, which is not illustrated, for inserting the brazing material X in a solid form in the axial direction L into a junction section between the first member M1 and the second member M2. Abutting the first member M1 onto the second member M2, inserting the brazing material X into the brazing material insertion hole, and heating the resultant body with a sintering furnace cause the first member M1 and the second member M2 to be bonded with the brazing material X, and the gathering section 60 and the carrier CR are integrated by means of sintering.

In the embodiment illustrated in FIG. 13, a section of the second member M2 that is joined to the protruding sections 61 formed in the first member M1 may extend outward in the radial direction R similarly to the first member M1. In this case, the section of the second member M2 also serves as the gathering section 60. Therefore, the gathering section 60 may be formed in both the first member M1 and the second member M2.

As is obvious, the target rotating body 6 is not limited to embodiments described above with reference to FIG. 11 to FIG. 13 in which the gathering section 60 is integrated with the carrier CR by means of sintering. The gathering section 60 may be formed as a member separate from the carrier CR and joined to the carrier CR.

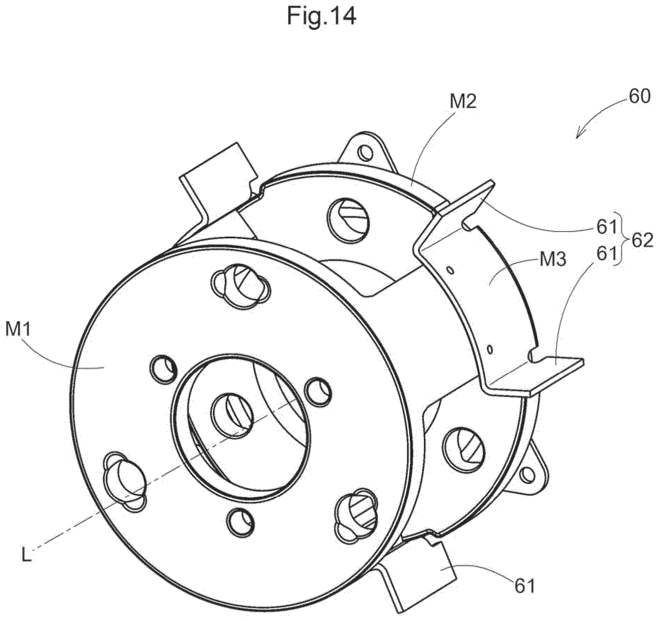

FIG. 14 illustrates an embodiment in which a section serving as the carrier CR of the planetary gear mechanism 31 is integrally formed, and this section and a section serving as the gathering section 60 (third member M3), which is formed by, for example, press working or the like, are assembled to integrally form the target rotating body 6 with the carrier CR being a main element. The carrier CR may be integrally formed by sintering the first member M1 and the second member M2 using the brazing material X or may be formed by means of other processing methods such as press working. The third member M3 that is provided with the gathering section 60 is formed, separately from the first member M1 and the second member M2, for example by press working or the like. For example, by accommodating the pinion gear PG in the carrier CR, supporting the pinion gear PG rotatably with respect to the carrier CR, and attaching the third member M3 to the carrier CR supporting the pinion gear PG, a rotatable member of the planetary gear mechanism 31 that is provided with the gathering section 60 is constructed as the target rotating body 6.

In the embodiments illustrated in FIG. 11 to FIG. 13, the target rotating body 6 including the gathering section 60 can be obtained by means of the sintering process. In contrast to this, in the embodiment illustrated in FIG. 14, a process for joining the third member M3 is separately required in addition to the process for forming the carrier CR. Since a process for accommodating the pinion gear PG is required in any of these cases, in the embodiment illustrated in FIG. 14, a process for attaching the third member M3 is additionally generated. Since the third member M3 is required in addition to the first member M1 and the second member M2, the number of components increases and a component cost and a management cost are also likely to increase. With respect to a member that is provided with the gathering section 60, for example, the first member M1 as a single member, the cost may be higher compared to a case in which the carrier CR is formed in a simple form because the gathering section 60 is included, but the cost may be often lower compared to a case in which the third member M3 is separately provided.

The carrier CR and the gathering section 60 may be formed as separate members and assembled in this manner, or may be integrated by means of sintering. However, when the target rotating body 6 is formed by integrating the section serving as the carrier CR with the section serving as the gathering section 60 by means of sintering, compared to a case in which the target rotating body 6 is constructed of these sections formed as separate members, the number of components may be reduced and man-hours for processing may be reduced.

In the embodiments described above with reference to FIG. 11 to FIG. 14, the embodiments in which the gathering section 60 is constructed of the protruding sections 61 (first protruding sections) have been described by way of example. Although illustration and detailed description thereof are omitted, even in an embodiment in which the gathering section 60 includes, in addition to the protruding sections 61 (first protruding sections), the second protruding section 63 provided with the cover section 63a, the gathering section 60 and the carrier CR may be integrated by means of sintering.

### [Alternative embodiments]

Next, alternative embodiments are described. Configurations for embodiments to be described below are not only applicable independently to each corresponding embodiment, and may be combined with a configuration for an alternative embodiment and applied to other embodiments as long as there is no inconsistency.
(1) In the embodiments described above, the carrier CR has been described as an example of the target rotating body 6. However, the target rotating body 6 does not have to be the carrier CR and may be a rotating body other than the carrier CR constituting the planetary gear mechanism 31. For example, the target rotating body 6 may be the ring gear RG if the ring gear RG is not fixed as in this embodiment. Alternatively, the target rotating body 6 may be the sun gear SG. When the transmission gear 32 that is coupled to and rotates in an integrated manner with the carrier CR is considered as an output gear of the planetary gear mechanism 31, the transmission gear 32 may be considered to be included in the rotating body constituting the planetary gear mechanism 31.
(2) In the embodiments described above, the embodiment has been described by way of example in which the second feeding port 72 is disposed on the side opposite to the side on which the axis of the differential input gear 41 (second shaft A2) is disposed with respect to the axis of the target rotating body 6 (for example, the first shaft A1) and on the upper side V1 with respect to the axis of the target rotating body 6 (first shaft A1). However, for example, if the oil gathered and scattered upward by the gathering section 60 can be introduced through the second feeding port 72, the second feeding port 72 may be disposed on the side on which the second shaft A2 is disposed with respect to the first shaft A1 and on the upper side V1 with respect to the first shaft A1. In view of an oil supply path from the catch tank 7 to the lubrication target portions, the second feeding port 72 may be disposed in the upward or downward direction V relatively on the upper side V1. However, this configuration does not prevent the second feeding port 72 from being disposed on the lower side V2 with respect to the first shaft A1 if an oil passage to the lubrication target portions can be appropriately secured in the second rotational state.
(3) In the embodiments described above, the embodiment has been described by way of example in which the upper end H4 of the differential input gear 41 is located on the upper side V1 with respect to the upper end H6 of the target rotating body 6, but the upper end H4 of the differential input gear 41 may be located at a position having the same height in the upward or downward direction V as the upper end H6 of the target rotating body 6. If the oil scattered by centrifugal force generated by the rotation of the differential input gear 41 can be introduced through the first feeding port 71, the upper end H4 of the differential input gear 41 may be located on the lower side V2 with respect to the upper end H6 of the target rotating body 6.
(4) In the embodiments described above, the embodiment has been described by way of example in which the arrangement area for the second feeding port 72 in the axial direction L and the arrangement area for the differential input gear 41 in the axial direction L are disposed in such a way as not to overlap with each other. However, this does not prevent a configuration in which the arrangement area for the second feeding port 72 in the axial direction L at least partially overlaps with the arrangement area for the differential input gear 41 in the axial direction L, for example, if oil is scattered extensively along the axial direction L by the rotation of the target rotating body 6 and it is desired to introduce oil through the second feeding port 72. In this case, a construction, for example, a protruding section protruding inside the catch tank 7 in such a way as to serve as a canopy, may be provided in the catch tank 7 on the upper side V1 with respect to the second feeding port 72, the construction being provided for preventing oil flowing in the catch tank 7 from flowing out from the second feeding port 72.
   As illustrated in the alternative embodiment (1), when the target rotating body 6 is the transmission gear 32, the arrangement areas for these gears in the axial direction L overlap with the arrangement area for the differential input gear 41. Therefore, the arrangement area for the second feeding port 72 in the axial direction L and the arrangement area for the differential input gear 41 in the axial direction L may be disposed in such a way as to overlap with each other. However, this embodiment in which the target rotating body 6 is the transmission gear 32 and the arrangement area for the second feeding port 72 in the axial direction L and the arrangement area for the differential input gear 41 in the axial direction L overlap with each other is not prevented, for example, if oil flowing out from the second feeding port 72 can be prevented, for example, by providing the canopy in the catch tank 7 as described above.
(5) In the embodiments described above, the embodiment has been described by way of example in which the communication opening 74 is formed in the section of the guide wall 9r that separates the target rotating body 6 from the differential gear mechanism 4 in such a way that the side of the target rotating body 6 with respect to the guide wall 9r communicates with the side of the differential gear mechanism 4 with respect to the guide wall 9r. However, the differential gear mechanism 4 can be lubricated with the oil, for example, gathered by the differential input gear 41, and an embodiment may not include such a communication opening 74.

### [Summary of embodiments]

The vehicular driving device (100) that has been described above is briefly summarized.

In an aspect, the vehicular driving device (100) includes: a drive source (1); a pair of output members (43), each of which is coupled to and driven by one of a pair of wheels (W); a transmission mechanism (3) that transmits driving force between the drive source (1) and the pair of output members (43); a case (9) that accommodates the transmission mechanism (3) and oil; and a catch tank (7) that temporarily stores the oil in the case (9), wherein the transmission mechanism (3) includes: a differential input gear (41) that is disposed coaxially with the pair of output members (43) (on a shaft A2) and to which the driving force from the drive source (1) is transmitted; a differential gear mechanism (4) that distributes the driving force transmitted to the differential input gear (41) to the pair of output members (43); and a target rotating body (6) that is disposed on a shaft (A1) different from those for the pair of output members (43) and rotates in a direction opposite to the differential input gear (41), wherein the transmission mechanism (3) includes a planetary gear mechanism (31), wherein the target rotating body (6) is a rotating body constituting the planetary gear mechanism (6), wherein the target rotating body (6) is provided with a gathering section (60) formed along a circumference of the target rotating body (6), wherein the case (9) is provided with a guide wall (9r) that surrounds the target rotating body (6), wherein assuming the shaft (A1) in which a rotation axis of the target rotating body (6) is placed as a target shaft (A1), a direction orthogonal to the target shaft (A1) as a radial direction (R), a rotational state of the transmission mechanism (3) when the wheel (W) rotates in a first side as a first rotational state (C1, C10), and a rotational state of the transmission mechanism (3) when the wheel (W) rotates in a second side opposite to the first side as a second rotational state (C2, C20), the catch tank (7) is provided on an outer side (R2) in the radial direction (R) with respect to the guide wall (9r) and provided with a first introduction path (K1) into which oil scattered from the differential input gear (41) is introduced in the first rotational state (C1, C10) and a second introduction path (K2) into which oil scattered from the gathering section (60) of the target rotating body (6) is introduced in the second rotational state (C2, C20).

With this configuration, when the wheel (W) rotates in the first side, oil gathered by the differential input gear (41) is introduced through the first introduction path (K1) into the catch tank (7) and when the wheel (W) rotates in the second side, oil gathered by the gathering section (60) of the target rotating body (6) is introduced through the second introduction path (K2) into the catch tank (7). Therefore, irrespective of a rotation direction of the wheel (W), oil in the case (9) can be appropriately gathered by the rotating body of the transmission mechanism (3) and introduced into the catch tank (7). In addition, with this configuration, since the case (9) is provided with the guide wall (9r) that surrounds the target rotating body (6), flow of the oil gathered by the gathering section (60) of the target rotating body (6) can be guided in such a way that the oil circulates around the target rotating body (6). Thus, even when the wheel (W) rotates in the second side, oil that flows along the guide wall (9r) can be guided to the second introduction path (K2) and a sufficient amount of oil can be introduced into the catch tank (7). Thus, with this configuration, a lubricating structure having a simple structure can be achieved in the vehicular driving device (100) that includes the planetary gear mechanism (31) in the transmission mechanism (3), the lubricating structure enabling oil to be introduced into the catch tank (7) with the rotating body of the transmission mechanism (3) gathering the oil irrespective of the direction in which the wheel (W) rotates.

It is preferable if the case (9) is provided with a peripheral wall (9a) that surrounds a transmission mechanism accommodation chamber (E3) in which the transmission mechanism (3) is housed, the guide wall (9r) is disposed in such a way as to face against the peripheral wall (9a) from inside the transmission mechanism accommodation chamber (E3), an upper end (H4) of the differential input gear (41) is located on an upper side (V1) with respect to the upper end (H6) of the target rotating body (6), and the first introduction path (K1) includes a first feeding port (71) that is disposed between the guide wall (9r) and the peripheral wall (9a) in an upward or downward direction (V) and opens toward a side on which the upper end (H4) of the differential input gear (41) is located.

Since the guide wall (9r) surrounds the target rotating body (6), when the upper end (H4) of the differential input gear (41) is located on the upper side (V1) with respect to the upper end (H6) of the target rotating body (6), the upper end (H4) of the differential input gear (41) may be easily disposed closer in the upward or downward direction (V) to a position of the guide wall (9r) on a side of the differential input gear (41). In addition, the first feeding port (71) for introducing the oil gathered by the differential input gear (41) through the first introduction path (K1) into the catch tank (7) is disposed between the guide wall (9r) and the peripheral wall (9a) in the upward or downward direction (V) and opens toward a side on which the upper end (H4) of the differential input gear (41) is located. Therefore, the oil gathered by the differential input gear (41) can be easily guided to the catch tank (7).

It is also preferable if the second introduction path (K2) includes a second feeding port (72) disposed on a side opposite to a side on which an axis (A2) of the differential input gear (41) is disposed with respect to the axis (A1) of the target rotating body (6) and on the upper side (V1) with respect to the axis (A1) of the target rotating body (6).

Since the second feeding port (72) is provided on the side opposite to the side on which the axis (A2) of the differential input gear (41) is disposed with respect to the axis (A1) of the target rotating body (6), oil gathered by the target rotating body (6) can be directed, when viewed from an axial direction, to approximately the same direction as the direction to which the oil gathered by the differential input gear (41) is directed when the wheel (W) rotates in the first side. In other words, both the oil from the differential input gear (41) and the oil from the target rotating body (6) can be easily introduced into the same catch tank (7). A relatively larger portion of the oil that has been gathered by the target rotating body (6) is scattered near the upper end (H6) of the target rotating body (6). Since the second feeding port (72) is disposed on the upper side (V1) with respect to the axis (A1) of the target rotating body (6), the oil scattered from the target rotating body (6) can be easily introduced through the second feeding port (72) into the catch tank (7). In addition, since the second feeding port (72) is disposed on the upper side (V1) with respect to the axis (A1) of the target rotating body (6), the catch tank (7) may be easily disposed on the upper side (V1) in the case (9), which enables oil to be easily guided to lubrication target portions.

It is also preferable, assuming a direction along the target shaft (A1) as an axial direction (L), if an arrangement area for the second feeding port (72) in the axial direction (L) and an arrangement area for the differential input gear (41) in the axial direction (L) are disposed in such a way as not to overlap with each other.

An area in the axial direction (L) where the oil flowing along the guide wall (9r) that has been gathered by the differential input gear (41) and introduced into the catch tank (7) flows substantially overlaps with the arrangement area for the differential input gear (41) in the axial direction (L). When the arrangement area for the second feeding port (72) in the axial direction (L) and the arrangement area for the differential input gear (41) in the axial direction (L) overlap with each other, the second feeding port (72) coincides with the flow of the oil that has been gathered by the differential input gear (41) and flows along the guide wall (9r), and the oil introduced into the catch tank (7) may easily flow out from the second feeding port (72). When the arrangement area for the second feeding port (72) in the axial direction (L) and the arrangement area for the differential input gear (41) in the axial direction (L) are disposed in such a way as not to overlap with each other, an amount of oil that flows out from the second feeding port (72) when the wheel (W) rotates in the first side can be reduced, which enables a sufficient amount of oil to be easily stored in the catch tank (7).

A communication opening (74) may be formed in a section of the guide wall (9r) that separates the target rotating body (6) from the differential gear mechanism (4) in such a way that a side of the target rotating body (6) with respect to the guide wall (9r) communicates with a side of the differential gear mechanism (4) with respect to the guide wall (9r).

With this configuration, when the wheel (W) rotates in the second side, a portion of the oil gathered by the gathering section (60) of the target rotating body 6 can be supplied to the side of the differential gear mechanism (4). Therefore, the differential gear mechanism (4) can be easily and appropriately lubricated when the wheel (W) rotates in the second side.

It is preferable if the planetary gear mechanism (31) includes a carrier (CR) that rotatably supports a plurality of planetary gears (PG), the target rotating body (6) is the carrier (CR) of the planetary gear mechanism, the carrier (CR) includes a plurality of gear shafts (PX) each of which rotatably supports each of a plurality of the planetary gears (PG) and a lubricating oil passage (8) that communicates with portions requiring lubrication of the planetary gears (PG) and the gear shafts (PX), and the gathering section (60) includes a guiding section (63) that guides the gathered oil by means of rotation of the carrier (CR) to the lubricating oil passage (8).

With the configuration as described above, a portion of the oil gathered by the gathering section (60) can be directly guided by the guiding section (63) of the gathering section (60) to the lubricating oil passage (8) without being routed through the catch tank (7). Thus, oil can be quickly supplied to the lubrication target portions.

Assuming a direction along the target shaft (A1) as the axial direction (L), one side of the axial direction (L) as a first side (L1) of the axial direction and a side of the axial direction (L) opposite to the first side (L1) of the axial direction as a second side (L2) of the axial direction, it is configured in such a way that the lubricating oil passage (8) is provided with a first opening (67) that opens toward the first side (L1) of the axial direction and a second opening (66) that opens toward the second side (L2) of the axial direction, oil from the catch tank (7) is supplied to the first opening (67), and the guiding section (63) guides the oil to the second opening (66).

With the configuration as described above, a portion of the oil that has been stored in the catch tank (7) can be supplied from the first opening to the lubricating oil passage (8), and at the same time, the oil gathered by the gathering section (60) can be directly supplied from the second opening (66) to the lubricating oil passage (8) without being routed through the catch tank (7). Thus, oil can be easily and stably supplied to the portions requiring lubrication of the planetary gears (PG) and the gear shafts (PX). Although oil to be introduced into the catch tank (7) tends to decrease in a condition in which viscosity of the oil is high, such as cold environment, oil can be easily and stably supplied to the lubrication target portions even in such a case.

The target rotating body (6) may be a sintered body, which is formed by integrating a section serving as the carrier (CR) of the planetary gear mechanism (31) with a section serving as the gathering section (60).

With this configuration, compared to a case in which the section serving as the carrier (CR) and the section serving as the gathering section (60) are constructed as separate members, the number of components may be reduced and man-hours for processing may be reduced.

### Reference Signs List

- 1: Rotating electric machine (Drive source)
- 2: Output member
- 3: Transmission mechanism
- 4: Differential gear mechanism
- 6: Target rotating body
- 8: Lubricating oil passage
- 7: Catch tank
- 9: Case
- 9a: Inner surface (Peripheral wall)
- 9r: Guide wall
- 41: Differential input gear
- 43: Side gear (Output member)
- 60: Gathering section
- 63: Second protruding section (Guiding section)
- 66: Second opening
- 67: First opening
- 71: First feeding port
- 72: Second feeding port
- 74: Communication opening
- 100: Vehicular driving device
- A1: First shaft (Target shaft)
- CR: Carrier
- E3: Transmission mechanism accommodation chamber
- H4: Upper end
- H6: Upper end
- K1: First introduction path
- K2: Second introduction path
- L: Axial direction
- L1: First side of the axial direction
- L2: Second side of the axial direction
- PG: Pinion gear (Planetary gear)
- PX: Pinion shaft (Gear shaft)
- R: Radial direction
- R2: Radially outer side
- V: Upward or downward direction
- V1: Upper side
- W: Wheel

## Claims

1. A vehicular driving device comprising:
a drive source;
a pair of output members, each being coupled to and driven by one of a pair of wheels;
a transmission mechanism that transmits driving force between the drive source and a pair of the output members;
a case that accommodates the transmission mechanism and oil; and
a catch tank that temporarily stores oil in the case, wherein
the transmission mechanism includes:
a differential input gear that is disposed coaxially with a pair of the output members and to which the driving force from the drive source is transmitted;
a differential gear mechanism that distributes the driving force transmitted to the differential input gear into a pair of the output members; and
a target rotating body that is disposed on a shaft different from those for a pair of the output members and rotates in a direction opposite to the differential input gear,
the transmission mechanism includes a planetary gear mechanism,
the target rotating body is a rotating body constituting the planetary gear mechanism,
the target rotating body includes a gathering section being formed along a circumference of the target rotating body,
the case includes a guide wall that surrounds the target rotating body,
assuming a shaft in which a rotation axis of the target rotating body is placed as a target shaft, a direction orthogonal to the target shaft as a radial direction, a rotational state of the transmission mechanism when the wheel rotates in a first side as a first rotational state, and a rotational state of the transmission mechanism when the wheel rotates in a second side opposite to the first side as a second rotational state,
the catch tank is
provided on an outer side in the radial direction with respect to the guide wall, and
includes a first introduction path into which oil scattered from the differential input gear is introduced in the first rotational state, and
a second introduction path into which oil scattered from the gathering section of the target rotating body is introduced in the second rotational state.

2. The vehicular driving device according to Claim 1, wherein
the case includes a peripheral wall that surrounds a transmission mechanism accommodation chamber in which the transmission mechanism is housed,
the guide wall is disposed in such a way as to face against the peripheral wall from inside of the transmission mechanism accommodation chamber,
an upper end of the differential input gear is disposed above an upper end of the target rotating body, and
the first introduction path includes a first feeding port that is disposed between the guide wall and the peripheral wall in an upward or downward direction and opens toward a side on which the upper end of the differential input gear is located.

3. The vehicular driving device according to Claim 1 or 2, wherein the second introduction path includes a second feeding port disposed on a side opposite to a side on which an axis of the differential input gear is disposed with respect to the axis of the target rotating body and on an upper side with respect to the axis of the target rotating body.

4. The vehicular driving device according to Claim 3, wherein,
assuming a direction along the target shaft as an axial direction,
an arrangement area in the axial direction for the second feeding port and an arrangement area in the axial direction for the differential input gear are disposed in such a way as not to overlap with each other.

5. The vehicular driving device according to Claim 1 or 2, wherein a communication opening is formed in a section of the guide wall that separates the target rotating body from the differential gear mechanism in such a way that a side of the target rotating body with respect to the guide wall communicates with a side of the differential gear mechanism with respect to the guide wall.

6. The vehicular driving device according to Claim 1 or 2, wherein
the planetary gear mechanism includes a carrier that rotatably supports a plurality of planetary gears,
the target rotating body is the carrier,
the carrier includes a plurality of gear shafts each of which rotatably supports each of a plurality of the planetary gears and a lubricating oil passage that communicates with portions requiring lubrication of the planetary gears and the gear shafts, and
the gathering section includes a guiding section that guides gathered oil by means of rotation of the carrier to the lubricating oil passage.

7. The vehicular driving device according to Claim 6, wherein,
assuming a direction along the target shaft as an axial direction, one side of the axial direction as a first side of the axial direction, and a side of the axial direction opposite to the first side of the axial direction as a second side of the axial direction,
the lubricating oil passage includes a first opening that opens toward the first side of the axial direction and a second opening that opens toward the second side of the axial direction,
oil from the catch tank is supplied to the first opening, and
the guiding section is configured to guide the oil to second opening.

8. The vehicular driving device according to Claim 1 or 2, wherein the target rotating body is a sintered body, and is formed by integrating a section serving as the carrier of the planetary gear mechanism with a section serving as the gathering section.
